# EUROPÄISCHE PATENTSCHRIFT

(11) **EP 3 606 787 B1**
(45) Veröffentlichungstag und Bekanntmachung des Hinweises auf die Patenterteilung: **09.06.2021**
(21) Anmeldenummer: 18704931.7
(22) Anmeldetag: 05.02.2018
(51) Int. Cl.: B60N 2/50, B60N 2/52, B60N 2/16, B60N 2/02

(54) **FEDERUNGSSYSTEM, VORZUGSWEISE FAHRERSITZ**
SUSPENSION SYSTEM, PREFERABLY DRIVER SEAT
SYSTÈME DE SUSPENSION, DE PRÉFÉRENCE SIÈGE DE CONDUCTEUR

(30) Priorität: 06.04.2017 DE 102017205902
(43) Veröffentlichungstag der Anmeldung: 12.02.2020
(73) Patentinhaber: ContiTech Vibration Control GmbH, 30165 Hannover (DE)
(72) Erfinder: WERHAHN, Max, 30449 Hannover (DE); MARIENFELD, Peter, 31608 Marklohe (DE)
(74) Vertreter: Continental Corporation
(86) Internationale Anmeldenummer: PCT/EP2018/052753
(87) Internationale Veröffentlichungsnummer: WO 2018/184752

(56) Entgegenhaltungen:
- EP-A1- 0 002 332
- EP-A2- 2 921 342
- DE-A1- 2 707 184

## Beschreibung

Die vorliegende Erfindung betrifft ein Federungssystem, vorzugsweise einen Fahrersitz, gemäß dem Oberbegriff des Patentanspruchs 1 sowie ein Fahrzeug mit einem derartigen Federungssystem gemäß des Patentanspruchs 15.

Auf dem Gebiet der Schwingungsdämpfung sind verschiedenste Anwendungen bekannt, bei denen Schwingungen zwischen einem feststehenden Federungsteil und einem relativ dazu beweglichen Federungsteil zu dämpfen sind. Hierzu gehören auch die Fahrersitze in manchen Fahrzeugen wie z.B. in Lkws, in Bussen etc. In diesem Fall sollen üblicherweise Schwingungen, welche von der Fahrbahn in das Fahrzeug eingeleitet werden können, über die Dämpfung des Fahrersitzes vom Fahrer ferngehalten werden, um gerade bei längeren Fahrten den Fahrer zu schonen. Dies soll nicht nur den Komfort für den Fahrer gerade bei längeren Strecken erhöhen sondern hierdurch auch seine Gesundheit schonen sowie die Ausdauer erhöhen, was der Sicherheit zugutekommen kann.

Im Falle eines Fahrersitzes ist das feststehende Federungsteil als Federungsunterteil ein Sitzgestell, welcher in der Hauptanregungsrichtung der Schwingung, d.h. üblicherweise in der Höhe, starr mit der Karosserie des Fahrzeugs verbunden ist. Das bewegliche Federungsteil als Federungsoberteil ist die Sitzfläche des Fahrersitzes, welche relativ zum Sitzgestell in der Höhe schwingend beweglich ist.

Die EP 2 921 342 A2 beschreibt eine Vorrichtung zur Abfederung eines Federungsoberteils in wenigstens einer Raumrichtung gegenüber einem relativ dazu bewegbaren Federungsunterteil, welche z.B. bei einem Fahrzeugsitz angewendet werden kann. Die Vorrichtung weist zum Abfedern eine zwischen dem Federungsoberteil und dem Federungsunterteil wirkende Federeinrichtung in Form eines Stoßdämpfers auf. Es ist ein Stellglied vorgesehen, durch welches eine Kraft bidirektional in Wirkrichtung der Federeinrichtung in die Vorrichtung einleitbar ist. Das Stellglied ist über eine Steuereinrichtung ansteuerbar.

Das Stellglied weist einen als Drehfeldmagnet ausgebildeten Antrieb und eine durch den Antrieb antreibbare als Kugelumlaufspindel ausgebildete Koppelstange auf. Der Antrieb ist fest an dem Federungsoberteil bzw. an dem Federungsunterteil und die Koppelstange an einer Loslagerquerverbindung angeordnet oder umgekehrt. Die Koppelstange ist als gefederte Koppelstange mit wenigstens einem Federelement ausgebildet. Die Federeinrichtung weist eine zwischen dem Federungsoberteil und dem Federungsunterteil angeordnete Feder und eine das Federungsoberteil mit dem Federungsunterteil gegeneinander beweglich verbindende Schereneinrichtung auf. Ferner ist wenigstens ein Bewegungssensor vorgesehen, mit dem die Bewegungen in der wenigstens einen Raumrichtung des Federungsoberteils gegenüber dem Federungsunterteil feststellbar sind, die an die Steuereinrichtung weiterleitbar sind. Des Weiteren ist ein Beschleunigungssensor vorgesehen, mit dem Beschleunigungen zwischen dem Federungsoberteil und dem Federungsunterteil feststellbar sind, die an die Steuereinrichtung weiterleitbar sind.

Mittels dieser Vorrichtung ist es möglich, über das Stellglied eine aktive Regelung bidirektional in Wirkrichtung der Federeinrichtung zu realisieren, sodass durch das Stellglied zum einen eine Novellierung bei temporären Abweichungen des Abstandes zwischen Federungsunter- und Federungsoberseite und zum anderen ein aktiver Eingriff in die Schwingungsisolation erfolgen kann. Dies kann z.B. bei der Anwendung der Vorrichtung der EP 2 921 342 A2 bei einem Fahrzeugsitz den Komfort für den Fahrer erhöhen.

Nachteilig ist hierbei jedoch, dass zur Umsetzung der Vorrichtung der EP 2 921 342 A2 ein besonderes Stellglied, nämlich ein als Drehfeldmagnet ausgebildeter Antrieb mit einer als Kugelumlaufspindel ausgebildeten Koppelstange, erforderlich ist. Dies schränkt die Umsetzung der Vorrichtung der EP 2 921 342 A2 auf dieses Stellglied ein, welches kein standardisierter Antrieb ist und daher zu höheren Kosten als ein standardisierter Antrieb führen kann.

Nachteilig ist ferner, dass konstruktionsbedingt über das Stellglied stets hohe Axiallasten übertragen werden, was zu hohen mechanischen Belastungen des Stellgliedes führen kann. Dies kann zu einer verringerten Lebensdauer des Stellgliedes führen. Ferner kann die Nutzung der Vorteile der Vorrichtung der EP 2 921 342 A2 durch den Ausfall des Stellgliedes unterbrochen werden, was z.B. den Komfort für den Fahrer reduzieren kann. Auch kann der Austausch eines ausgefallenen Stellgliedes zur Unterbrechung der Nutzung sowie zu Material- und Montagekosten führen. Soll dennoch die Lebensdauer des Stellgliedes erhöht werden, so wäre das Stellglied massiver auszugestalten, um die hohen Axiallasten länger aushalten zu können. Diese würde jedoch zu gesteigerten Kosten, zu einem erhöhten Platzbedarf sowie zu einem erhöhten Gewicht führen, was jeweils nachteilig wäre.

Nachteilig ist auch, dass das Stellglied der Vorrichtung der EP 2 921 342 A2 eine nicht-lineare Kennlinie der Drehzahl in Relation zu dem Weg aufweist. Dies kann zu einer nichtlinearen Abhängigkeit zwischen konstanter Drehzahl des Stellgliedes und hierdurch erreichtem Weg führen, was eine nicht-lineare Steuerung bzw. Regelung verursachen würde, welche zu schlechteren Ergebnissen führen kann als ein linearer Zusammenhang.

Eine Aufgabe der vorliegenden Erfindung ist es, ein Federungssystem, insbesondere einen Fahrersitz, der eingangs beschriebenen Art bereit zu stellen, so dass Axiallasten auf das Stellglied vermieden oder zumindest reduziert werden können. Alternativ oder zusätzlich soll eine möglichst lineare Kennlinie der Drehzahl in Relation zu dem Weg des Stellglieds erreicht werden. Dies soll vorzugsweise mit standardisierten Elementen als Stellglied erfolgen.

Die Aufgabe wird erfindungsgemäß durch ein Federungssystem mit den Merkmalen gemäß Patentanspruch 1 sowie durch ein Fahrzeug mit den Merkmalen gemäß Patentanspruch 15 gelöst. Vorteilhafte Weiterbildungen sind in den Unteransprüchen beschrieben.

Somit betrifft die vorliegende Erfindung ein Federungssystem, vorzugsweise einen Fahrersitz, mit einem ersten Federungsteil, vorzugsweise einem Gestell des Fahrsitzes, einem zweiten Federungsteil, vorzugsweise einer Sitzfläche des Fahrersitzes, wobei die beiden Federungsteile relativ zueinander in wenigstens einer ersten Raumrichtung, vorzugsweise in der Höhe, beweglich sind. Das Federungssystem weist ferner eine Kinematik, vorzugsweise einer Scherenkinematik, auf, welche ausgebildet ist, die beiden Federungsteile relativ zueinander wenigstens in der ersten Raumrichtung beweglich zu verbinden.

Das Federungssystem weist auch eine Federeinrichtung auf, welche ausgebildet ist, die statische Last des zweiten Federungsteils zu tragen. Im Falle der Umsetzung des Federungssystems als Fahrersitz kann dies das Gewicht eines Fahrers, welcher auf dem zweiten Federungsteil als Sitzfläche sitzt, einschließen. Vorzugsweise ist die Federeinrichtung auch ausgebildet, Relativbewegung der beiden Federungsteile zueinander passiv zu dämpfen. Die Federeinrichtung ist vorzugsweise ferner oder alternativ ausgebildet, die vertikale Mittellage, um die das Federungssystem schwingend gelagert ist, zu definieren. Des Weiteren ist die Federeinrichtung vorzugsweise zusätzlich oder alternativ ausgebildet, eine zur Mittellage rückstellende Funktion auszuüben. Die Federeinrichtung ist vorzugsweise als elastische Federung z.B. als Luftfeder oder als Spiralfeder ausgebildet.

Des Weiteren weist das Federungssystem ein Stellglied auf, welches ausgebildet ist, eine Kraft bidirektional zwischen den beiden Federungsteilen einzuleiten und hierdurch die Relativbewegung der beiden Federungsteile zueinander aktiv zu dämpfen. Mit anderen Worten wird die Bewegung des zweiten Federungsteils wie z.B. einer Sitzfläche aktiv bedämpft bzw. von der Anregung am ersten Federungsteil wie z.B. Kabinenschwingungen eines Fahrzeugs aktiv isoliert.

Ein derartiges Federungssystem kann vorzugsweise ein Fahrersitz sein, jedoch auch jegliche sonstige Federungsteile, welche relativ zueinander in wenigstens einer ersten Raumrichtung verbunden sind und sowohl wenigstens ein passives und wenigstens ein aktives Stellglied aufweisen. Dies können z.B. eine Arbeitsplatte, ein Krankenhausbett, eine Fahrzeugkabine, eine Messeinrichtung und dergleichen sein.

Das erfindungsgemäße Federungssystem ist dadurch gekennzeichnet, dass das Stellglied eine Lagerung, vorzugsweise ein Kugellager, aufweist, welche innerhalb des Kraftflusses zwischen den beiden Federungsteilen derart angeordnet ist, so dass eine Axiallast von der antreibenden Achse des Stellglieds zumindest teilweise, vorzugsweise vollständig, ferngehalten werden kann. Diese Lagerung kann starr oder elastisch ausgebildet sein. Diese Lagerung ist vorzugsweise innerhalb des Stellgliedes möglichst unmittelbar dort angeordnet, wo die Relativbewegung innerhalb des Stellgliedes stattfinden kann.

Hierdurch kann es zu einer Aufnahme der Axialkräfte durch die Lagerung kommen, so dass diese von dem übrigen Stellglied und insbesondere von einem Motor des Stellgliedes ferngehalten werden können, welcher die antreibende Achse des Stellgliedes darstellen kann. Dies kann das übrige Stellglied und insbesondere einen Motor entlasten sowie zu einer möglichst linearen Kennlinie der Drehzahl in Relation zu dem Weg des Stellglieds führen. Auch kann dies z.B. bei der Verwendung eines Kugellagers mit einem standardisierten Element umgesetzt werden, was die Kosten der Umsetzung gering halten kann.

Gemäß einem Aspekt der vorliegenden Erfindung weist das Stellglied einen Motor, vorzugsweise einen elektrischen Motor, eine Gewindemutter, vorzugsweise eine Kugelgewindemutter, und eine Spindel auf, wobei der Motor ausgebildet ist, die Spindel anzutreiben, so dass die Gewindemutter relativ zur Spindel, vorzugsweise in der ersten Raumrichtung, bewegt werden kann, wobei die Lagerung zwischen dem Motor und der Spindel angeordnet ist, wobei der Motor am ersten Federungsteil und die Gewindemutter am zweiten Federungsteil angeordnet ist, oder umgekehrt. Die Gewindemutter kann als Kugelgewindemutter, als Rollengewindemutter oder als Gleitgewindemutter ausgebildet sein. Die Gleitgewindemutter kann metallisch und mit oder ohne Beschichtung ausgebildet sein.

Dies stellt eine Möglichkeit dar, um ein Stellglied mit Standardkomponenten umzusetzen und hierdurch die Nutzung der zuvor beschriebenen Vorteile zu erreichen. Vorzugsweise wird hierbei ein rotatorisch wirkender Motor verwendet, wie er bei Kugelgewindetrieben üblich ist. Hierbei einen elektrischen Motor zu verwenden ist vorteilhaft, weil elektrische Energie üblicherweise einfacher und bzw. oder sauberer zur Verfügung gestellt werden kann als z.B. pneumatischer oder hydraulischer Druck. Die Anordnung der Lagerung zwischen dem Motor und der Spindel sorgt dabei dafür, dass die zuvor beschriebenen Vorteile der Entkopplung der Axialkräfte umgesetzt werden können.

Zum einen können der Motor und die Spindel am ersten Federungsteil angeordnet werden, welches z.B. als Gestell eines Fahrersitzes feststehend in Relation zum zweiten Federungsteil sein kann, welches z.B. die Sitzfläche eines Fahrersitzes sein kann, mit der die Gewindemutter verbunden sein kann. Hierdurch kann der Motor samt Spindel feststehend am Gestell angeordnet werden, was üblicherweise konstruktiv einfacher ist als die umgekehrte Anordnung dieser Bauteile. Zum anderen kann die Anordnung auch umgekehrt vorgenommen werden, so dass der Motor samt Spindel mit der Sitzfläche des Fahrersitzes mitbeweglich ist. Dies kann die schwingende Masse erhöhen und hierdurch passiv dämpfend wirken.

Hierbei kann das Stellglied in der ersten Raumrichtung wirkend ausgerichtet sein, in der auch die aktiv zu dämpfende Relativbewegung auftreten kann. Dies kann eine möglichst direkte Kraftübertragung bewirken. Alternativ kann das Stellglied auch teilweise oder vollständig in eine andere Raumrichtung wirkend wie insbesondere senkrecht zur ersten Raumrichtung wirkend ausgerichtet sein, so dass über eine Kraftübertragung z.B. mittels der Kinematik als Scherenkinematik die Relativbewegung zwischen den beiden Federungsteilen erreicht werden kann. Dies kann den Gestaltungsspielraum des Federungssystems erhöhen.

Gemäß einem weiteren Aspekt der vorliegenden Erfindung sind der Motor und die Spindel derart angeordnet, dass der Motor die Spindel direkt antreiben kann, wobei der Motor und die Spindel eine gemeinsame Rotationsachse aufweisen, welche vorzugsweise in der ersten Raumrichtung orientiert ist. Dies kann die Umsetzung vereinfachen.

Gemäß einem weiteren Aspekt der vorliegenden Erfindung ist das Stellglied außerhalb der beiden Federungsteile, vorzugsweise ferner parallel zu den beiden Federungsteilen, angeordnet. Hierdurch kann Bauraum und insbesondere Bauhöhe zwischen den beiden Federungsteilen gespart werden. Ferner kann das Stellglied z.B. zur Montage, Wartung, Reparatur etc. einfacher zugänglich sein.

Gemäß einem weiteren Aspekt der vorliegenden Erfindung weist das Stellglied einen Motor, vorzugsweise einen elektrischen Motor, eine Gewindemutter, vorzugsweise eine Kugelgewindemutter, und eine Spindel auf, wobei der Motor ausgebildet ist, die Gewindemutter anzutreiben, so dass die Spindel relativ zur Gewindemutter, vorzugsweise in der ersten Raumrichtung, bewegt werden kann, wobei die Lagerung innerhalb des Kraftflusses zwischen dem Motor und der Gewindemutter angeordnet ist, wobei der Motor am ersten Federungsteil und die Spindel am zweiten Federungsteil angeordnet ist, oder umgekehrt.

Dies stellt eine weitere Möglichkeit dar, um ein Stellglied mit Standardkomponenten umzusetzen und hierdurch die Nutzung der zuvor beschriebenen Vorteile zu erreichen. In diesem Fall kann die Anordnung der Lagerung zwischen dem Motor und der Gewindemutter dafür sorgen, dass die zuvor beschriebenen Vorteile der Entkopplung der Axialkräfte umgesetzt werden können.

Gemäß einem weiteren Aspekt der vorliegenden Erfindung sind der Motor und die Gewindemutter derart angeordnet, dass der Motor die Gewindemutter indirekt über ein Kopplungselement, vorzugsweise über einen Zahnriemen, antreiben kann, wobei der Motor und die Gewindemutter zwei unterschiedliche Rotationsachsen aufweisen, welche vorzugsweise parallel zueinander und besonders vorzugsweise ferner in der ersten Raumrichtung orientiert sind. Hierdurch kann eine alternative Umsetzung erfolgen.

Gemäß einem weiteren Aspekt der vorliegenden Erfindung ist das Stellglied zwischen den beiden Federungsteilen angeordnet, wobei das Stellglied vorzugsweise ferner ausgebildet ist, die Kraft bidirektional zwischen den beiden Federungsteilen in der ersten Raumrichtung einzuleiten. Hierdurch kann eine kompakte Anordnung geschaffen werden, so dass Bauraum außerhalb der beiden Federungsteile eingespart werden kann. Auch kann das Stellglied auf diese Weise geschützt werden.

Gemäß einem weiteren Aspekt der vorliegenden Erfindung weist das Federungssystem ein elastisches Dämpfungselement, vorzugsweise ein elastomeres Dämpfungselement, auf, welches zwischen der Spindel und dem Federungsteil angeordnet und ausgebildet ist, den Kraftfluss passiv zu dämpfen. Hierdurch kann eine Dämpfung von hochfrequenten Schwingungen erreicht werden, deren Frequenz zu hoch ist, um sie wirkungsvoll aktiv dämpfen zu können. Auch kann die aktive Dämpfung durch das elastische Dämpfungselement innerhalb desselben Kraftflusses unterstützt und entlastet werden.

Gemäß einem weiteren Aspekt der vorliegenden Erfindung weist das Federungssystem eine Steuerungseinheit auf, welche ausgebildet ist, den Stellantrieb derart zu steuern, so dass die Relativbewegung der beiden Federungsteile zueinander aktiv gedämpft werden kann. Hierdurch kann eine aktive Dämpfung und insbesondere Regelung umgesetzt werden.

Gemäß einem weiteren Aspekt der vorliegenden Erfindung weist das Federungssystem wenigstens einen Positionssensor auf, welcher ausgebildet ist, eine Position des ersten Federungsteils relativ zum zweiten Federungsteil in wenigstens der ersten Raumrichtung zu erfassen, oder umgekehrt, wobei der Positionssensor ferner ausgebildet ist, die erfasste Position der Steuerungseinheit zur Verfügung zu stellen. Hierdurch die Position eines der Federungsteile relativ zu dem anderen Federungsteil erfasst werden, so dass aus der Änderung der erfassten Position eine Relativbewegung abgeleitet werden kann, welcher aktiv entgegengewirkt werden kann.

Gemäß einem weiteren Aspekt der vorliegenden Erfindung ist der Positionssensor absolut oder inkrementell messend ausgebildet. Eine absolute Positionsmessung bietet den Vorteil, sofort nach Betriebsbeginn des Federungssystems die Position als absoluten Wert verwenden zu können. Ein absolut messender Sensor ist jedoch üblicherweise teurer als ein inkrementell messender Positionssensor. Dieser hat jedoch den Nachteil, zuerst z.B. in Relation zu einer Endposition oder zu einer Mittelage referenziert werden zu müssen, um aus der relativen Messung des Inkrementallsensors einen absoluten Wert ableiten zu können. Als Mittellage kann beispielsweise die Position einer lastfreien Spindel definiert werden, da die statischen Kräfte durch die Federeinrichtung aufgenommen werden. Zur Verwendung einer Endposition zur Referenzierung wäre es möglich, vor Benutzung des Federungssystems das Stellglied in einen Endanschlag fahren zu lassen und relativ zu dieser Stellung die Position zu bestimmen.

Gemäß einem weiteren Aspekt der vorliegenden Erfindung weist das Federungssystem wenigstens einen Beschleunigungssensor auf, welcher ausgebildet ist, eine Beschleunigung des ersten Federungsteils relativ zum zweiten Federungsteil in wenigstens einer Raumrichtung, vorzugsweise in der ersten Raumrichtung, zu erfassen, oder umgekehrt, wobei der Beschleunigungssensor ferner ausgebildet ist, die erfasste Beschleunigung der Steuerungseinheit zur Verfügung zu stellen. Auf diese Weise kann die Information der Beschleunigung zusätzlich oder alternativ zu einer Positionsinformation für die Umsetzung der aktiven Dämpfung verwendet werden. Dabei wird vorzugsweise die Beschleunigung des ersten Federungsteils wie z.B. des Gestells eines Fahrersitzes erfasst, so dass durch die aktive Dämpfung Schwingungen von dem zweiten Federungsteil wie z.B. der Sitzfläche des Fahrersitzes ferngehalten werden können.

Gemäß einem weiteren Aspekt der vorliegenden Erfindung weist das Federungssystem eine Mehrzahl von Beschleunigungssensoren auf, welche ausgebildet sind, mehrere Beschleunigungen des ersten Federungsteils relativ zum zweiten Federungsteil in mehreren Raumrichtungen, vorzugsweise in drei senkrecht zueinander orientierten Raumrichtungen, besonders vorzugsweise in der Tiefe, in der Breite und in der Höhe zu erfassen, oder umgekehrt, wobei die Beschleunigungssensoren ferner ausgebildet sind, die erfassten Beschleunigungen der Steuerungseinheit zur Verfügung zu stellen. Hierdurch kann beispielsweise für einen Fahrersitz als Federungssystem durch Erfassung der Translationen in der Tiefe, in der Breite und in der Höhe sowie durch die jeweiligen Rotationen die Dynamik z.B. der Fahrerkabine erfasst werden, so dass hieraus eine sozusagen "globale" Höhenänderung der Sitzfläche des Fahrersitzes bestimmt und aktiv ausgeregelt werden kann. Dies kann die Wirkung der Regelung verbessern und den Komfort etc. für den Fahrer weiter erhöhen.

Gemäß einem weiteren Aspekt der vorliegenden Erfindung weist das Federungssystem wenigstens eine Verschiebungseinrichtung, vorzugsweise wenigstens eine horizontale Verschiebungseinrichtung, besonders vorzugsweise wenigstens ein horizontales Schienensystem, auf, welche ausgebildet ist, so dass
- das zweite Federungsteil relativ zur Kinematik in einer zweiten Raumrichtung, vorzugsweise in der Tiefe, verschoben werden kann, und bzw. oder
- die Kinematik relativ zum ersten Federungsteil in einer zweiten Raumrichtung, vorzugsweise in der Tiefe, verschoben werden kann, und bzw. oder
- das erste Federungsteil relativ zu einem Untergrund in einer zweiten Raumrichtung, vorzugsweise in der Tiefe, verschoben werden kann.

Auf diese Weise kann z.B. bei einem Fahrersitz der Komfort für den Fahrer weiter erhöht werden, indem z.B. der Abstand der Sitzfläche des Fahrersitzes zum Lenkrad verändert werden kann. Diese relative Beweglichkeit z.B. in der Tiefe kann dabei je nach Ausführungsform des Fahrersitzes an den zuvor beschriebenen verschiedenen Stellen zwischen der Sitzfläche und der Karosserie des Fahrzeugs umgesetzt werden.

Die vorliegende Erfindung betrifft auch ein Fahrzeug mit einem Federungssystem wie zuvor beschriebenen. Hierdurch können die zuvor beschriebenen Eigenschaften und Vorteile bei einem Fahrzeug wie z.B. in Lkws, in Bussen etc. umgesetzt werden. Dies kann an verschiedenen Stellen innerhalb des Fahrzeugs erfolgen, an denen Anregungen z.B. von der Fahrbahn in das Fahrzeug bzw. innerhalb des Fahrzeugs aktiv gedämpft werden sollen.

Vorzugsweise kann das Federungssystem ein Fahrersitz sein, so dass die zuvor beschriebenen Eigenschaften und Vorteile zur Komfortsteigerung des Fahrers bei einem Fahrzeug genutzt werden können.

Mehrere Ausführungsbeispiele und weitere Vorteile der Erfindung werden nachstehend im Zusammenhang mit den folgenden Figuren erläutert. Darin zeigt:
- Fig. 1: eine schematische Prinzipdarstellung einer passiven und aktiven Dämpfung eines Federungssystems in Form eines Fahrersitzes;
- Fig. 2: eine schematische perspektivische Darstellung eines erfindungsgemäßen Federungssystems in Form eines Fahrersitzes in einer ersten Ausführungsform;
- Fig. 3: eine schematische perspektivische Darstellung eines erfindungsgemäßen Federungssystems in Form eines Fahrersitzes in einer zweiten Ausführungsform;
- Fig. 4: eine schematische perspektivische Schnittdarstellung eines erfindungsgemäßen Federungssystems in Form eines Fahrersitzes in einer dritten Ausführungsform; und
- Fig. 5: eine schematische perspektivische Schnittdarstellung eines erfindungsgemäßen Federungssystems in Form eines Fahrersitzes in einer vierten Ausführungsform.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden.

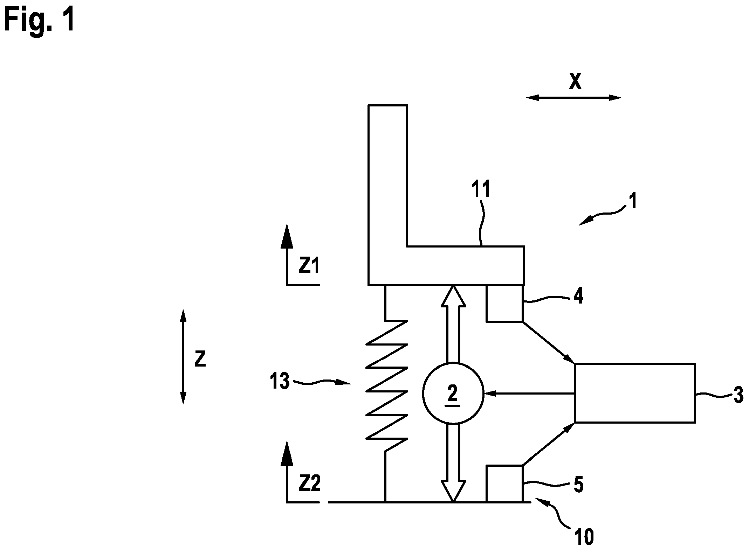

Fig. 1 zeigt eine schematische Prinzipdarstellung einer passiven und aktiven Dämpfung eines Federungssystems 1 in Form eines Fahrersitzes 1. Der Fahrersitz 1 weist ein Gestell 10 als erstes feststehendes Federungsteil 10 und eine Sitzfläche 11 als zweites bewegliches Federungsteil 11 auf, wobei "feststehend" und "beweglich" relativ zueinander zu verstehen sind. Die Sitzfläche 11 ist in der Höhe Z oberhalb des Gestells 10 angeordnet und mit diesem durch eine Kinematik 12 in Form einer Scherenkinematik 12 verbunden. Die Scherenkinematik 12 ist derart ausgerichtet, dass sich die beiden Paare der Halbscheren in der Tiefe X bewegen können, so dass sich die Sitzfläche 11 gegenüber dem Gestell 10 in der Höhe Z anheben oder absenken kann. Zwischen der Sitzfläche 11 und dem Gestell 10 sowie zwischen den Halbscherenpaaren der Scherenkinematik 12 ist ferner eine Federeinrichtung 13 in Form einer elastischen Federung 13 angeordnet, welche als Luftfeder 13 ausgebildet ist. Die Luftfeder 13 dient der Aufnahme der statischen Kräfte von der Sitzfläche 11 auf das Gestell 10 und ist in der Lage, Schwingungen von dem Gestell 10 in Richtung der Sitzfläche 11 in einem bestimmten Maße sowie innerhalb eines niederfrequenten Schwingungsbereichs zu isolieren. Weiterhin wirkt die Luftfeder 13 bei einer Auslenkung aus der Mittellage rückstellend auf die Relativbewegung und erhält somit mittelfristig die gewünschte Mittellage.

Zur Verbesserung der Dämpfung ist ferner ein Stellglied 2 vorgesehen, welches parallel zu der Luftfeder 13 angeordnet ist und entweder direkt oder indirekt über die Scherenkinematik 12 in der Höhe Z wirken kann. Hierdurch können Schwingungen, welche von dem Gestell 10 auf die Sitzfläche 11 übertragen werden können, zusätzlich aktiv gedämpft werden. Das Stellglied 2 wird hierzu von einer Steuerungseinheit 3 angesteuert und geregelt. Um eine Regelung ausführen zu können, ist ein Positionssensor 4 vorhanden, welcher an der Sitzfläche 11 derart angeordnet ist, so dass der Positionssensor 4 eine vertikale Position Z1 der Sitzfläche 11 relativ zu einer vertikalen Position Z2 des Gestells 10 erfassen kann. Aus dieser Position Z1 bzw. aus der Veränderung der Position Z1 kann auch eine Bewegung der Sitzfläche 11 relativ zum Gestell 10 geschlossen und aus dem Maß der Positionsänderung auch die Geschwindigkeit der Relativbewegung bestimmt werden. Ferner weist das Gestell 10 des Fahrersitzes 1 einen Beschleunigungssensor 5 auf, welcher die Beschleunigung des Gestells 10 in der Höhe Z erfassen kann, so dass auch diese Information in der Regelung der Steuerungseinheit 3 berücksichtigt werden kann.

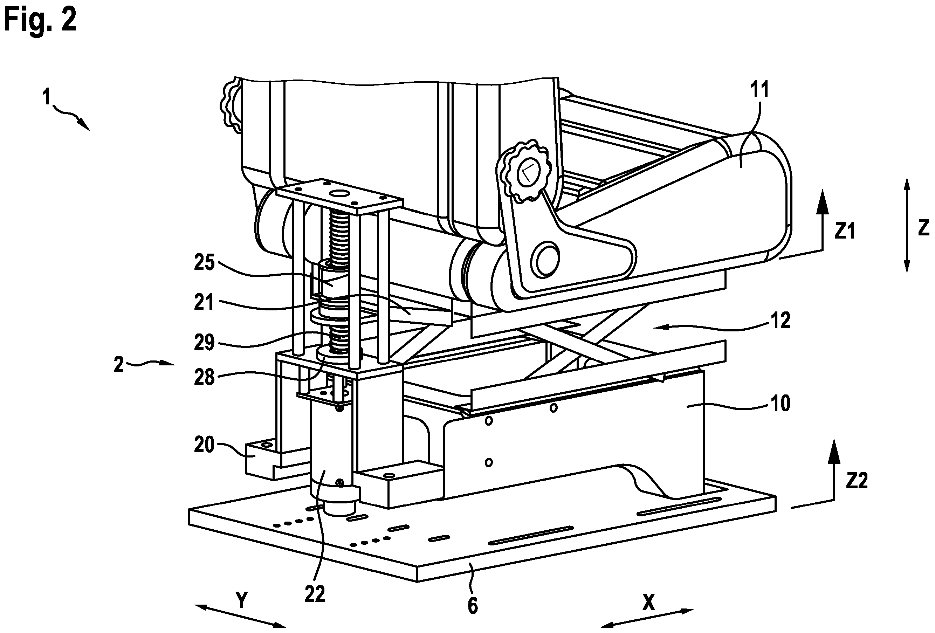

Fig. 2 zeigt eine schematische perspektivische Darstellung eines erfindungsgemäßen Federungssystems 1 in Form eines Fahrersitzes 1 in einer ersten Ausführungsform. Das Stellglied 2 weist eine erste Stellgliedhalterung 20 auf, mit der das Stellglied 2 auf der einen Seite feststehend an dem Gestell 10 montiert ist. Das Gestell 10 ist seinerseits feststehend auf einem Untergrund 6 wie in diesem Fall der Karosserie 6 eines Fahrzeugs angeordnet. Ferner weist das Stellglied 2 eine zweite Stellgliedhalterung 21 auf, mit der das Stellglied 2 auf der anderen Seite feststehend an der Sitzfläche 11 montiert ist. Das Stellglied 2 ist dabei in der Tiefe X von hinten an dem Gestell 10 und an der Sitzfläche 11 montiert, so dass das Stellglied 2 in dieser Ausführungsform eingesetzt und insbesondere nachgerüstet werden kann, ohne den Aufbau des Fahrersitzes 1 selbst verändern zu müssen.

An der ersten Stellgliedhalterung 20 des Gestells 10 ist ein elektrischer Motor 22 feststehend montiert und mit einer Spindel 29 eines Kugelgewindetriebs derart verbunden, dass der elektrische Motor 22 die Spindel 29 direkt rotatorisch antreiben kann. Der elektrische Motor 22 und die Spindel 29 weisen hierzu eine gemeinsame Rotationsachse auf, welche in der Höhe Z ausgerichtet ist und in diesem Ausführungsbeispiel die antreibende Achse des Stellgliedes 2 darstellt. Auf der Spindel 29 ist eine Gewindemutter 25 als Kugelgewindemutter 25 des Kugelgewindetriebs angeordnet und feststehend mit der zweiten Stellgliedhalterung 21 verbunden. Wird nun die Spindel 29 über den elektrischen Motor 22 rotatorisch angetrieben, so kann über die Bewegung der Kugelgewindemutter 25 die Sitzfläche 11 in der Höhe Z relativ zum Gestell 10 bewegt werden, so dass eine aktive Dämpfung von Schwingungen umgesetzt werden kann.

Die Spindel 29 ist dabei mittels einer Lagerung 28 in Form eines Kugellagers 28 direkt an der ersten Stellgliedhalterung 20 rotatorisch drehbar gelagert, so dass die Spindel 29 zwar die Rotationsbewegung des elektrischen Motors 22 ausführen kann, jedoch gleichzeitig Axialkräfte seitens der Sitzfläche 10 von dem Kugellager 28 aufgenommen und somit von dem elektrischen Motor 22 ferngehalten werden können. Dies kann den elektrischen Motor 22 entlasten und schonen. Ferner kann durch die Verwendung eines Kugelgewindetriebs eine lineare Kennlinie zwischen der Drehzahl des elektrischen Motors 22 in Relation zu dem Weg des Stellglieds 2 in der Höhe Z erreicht werden, was die Genauigkeit der Regelung verbessern und somit die Qualität und Wirksamkeit der Schwingungsdämpfung gegenüber bekannten aktiven Dämpfungen von Fahrersitzen 1 steigern kann. Ferner kann dies durch die Verwendung eines Kugelgewindetriebs durch standardisierte Elemente wie den elektrischen Motor 22, die Spindel 29 und die Kugelgewindemutter 25 in Kombination mit einem Kugellager 28 erreicht werden, was die Umsetzung vereinfachen und die Kosten der Umsetzung dieser Vorteil gering halten kann.

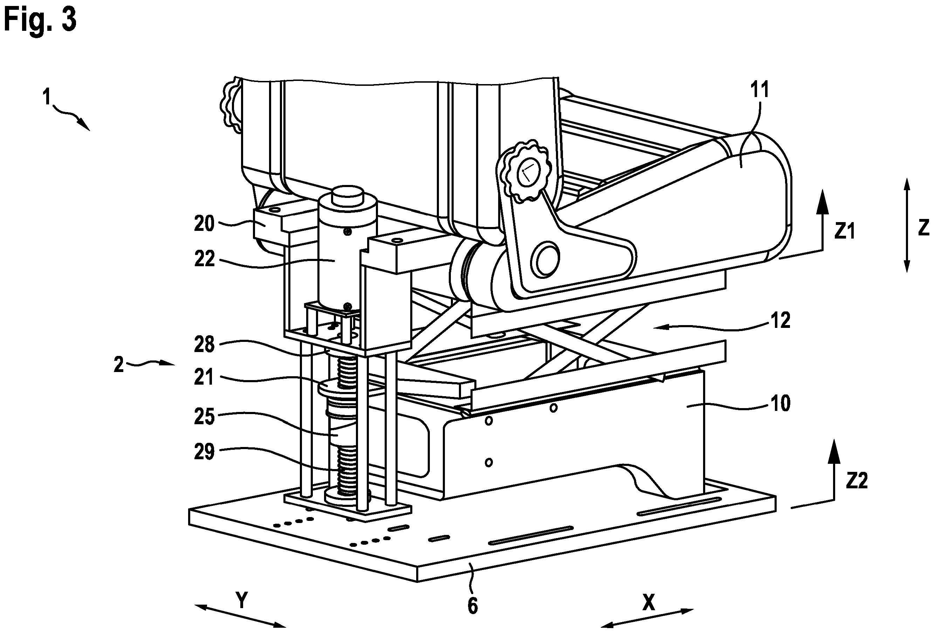

Fig. 3 zeigt eine schematische perspektivische Darstellung eines erfindungsgemäßen Federungssystems 1 in Form eines Fahrersitzes 1 in einer zweiten Ausführungsform. Diese zweite Ausführungsform unterscheidet sich lediglich dadurch von der ersten Ausführungsform, dass in diesem Fall der elektrische Motor 22 mit der Spindel 29 mittels der ersten Stellgliedhalterung 20 feststehend an der Sitzfläche 11 und die Kugelgewindemutter 25 mittels der zweiten Stellgliedhalterung 21 feststehend an dem Gestell 10 montiert ist. Hierdurch können die gleichen Eigenschaften wie bei dem ersten Ausführungsbeispiel erreicht werden. Ferner kann die Masse der zu dämpfenden Sitzfläche 11 erhöht werden, was schwindungsdämpfend wirken kann.

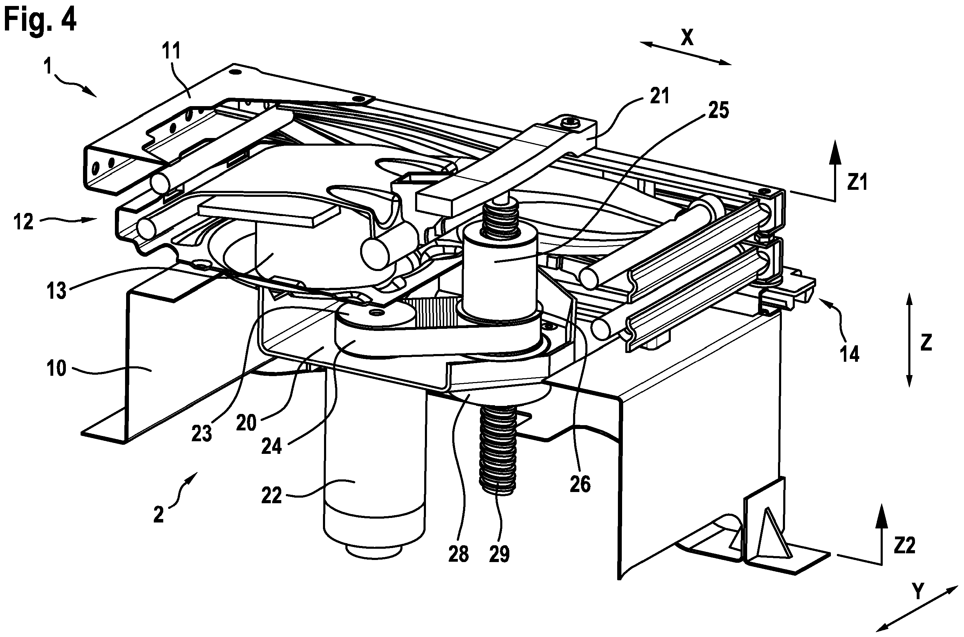

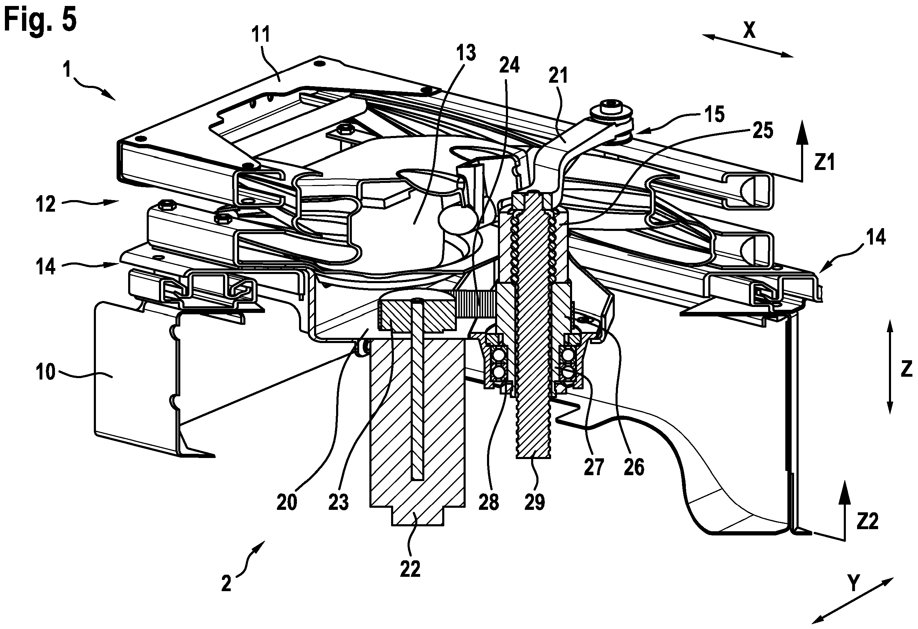

Fig. 4 zeigt eine schematische perspektivische Schnittdarstellung eines erfindungsgemäßen Federungssystems 1 in Form eines Fahrersitzes 1 in einer dritten Ausführungsform. Fig. 5 zeigt eine schematische perspektivische Schnittdarstellung eines erfindungsgemäßen Federungssystems 1 in Form eines Fahrersitzes 1 in einer vierten Ausführungsform.

In diesen beiden Ausführungsbeispielen ist das Stellglied 2 in der Höhe Z zwischen dem Gestell 10 und der Sitzfläche 11 angeordnet, so dass außerhalb der Grundmaße des Fahrersitzes 1 kein Bauraum hierfür verwendet werden muss. Gleichzeitig sind der elektrische Motor 22 und die Spindel 29 nebeneinander angeordnet, um zwischen dem Gestell 10 und der Sitzfläche 11 einen möglichst großen Hub in der Höhe Z zu erreichen. Die antreibende Achse des Stellglieds 2, welche der Achse des Motors 22 entspricht, ist somit in diesen beiden Ausführungsbeispielen parallel zur Achse der Spindel 29 angeordnet. Der elektrische Motor 22 ist über eine erste Stellgliedhalterung 20 in Form einer Wanne 20 feststehend mit dem unteren Bereich der Scherenkinematik 12 verbunden und etwa unterhalb der Luftfeder 13 angeordnet. An seinem oberen Ende weist der elektrische Motor 22 eine Zahnscheibe 23 auf, welche durch den elektrischen Motor 22 rotatorisch angetrieben werden kann.

Parallel zu dem elektrischen Motor 22 und in der Tiefe X zu diesem versetzt ist in diesen beiden Ausführungsbeispielen die Kugelgewindemutter 25 an der ersten Stellgliedhalterung 20, d.h. an der Wanne 20, angeordnet. Die Kugelgewindemutter 25 ist dabei mit einer Hohlwelle 27 feststehend verbunden und in der Höhe Z oberhalb der Hohlwelle 27 angeordnet. Die Hohlwelle 27 ist über das Kugellager 28 rotatorisch drehbar mit der Wanne 20 verbunden, so dass in diesen beiden Ausführungsbeispielen Axialkräfte, welche auf die Kugelgewindemutter 25 wirken können, über das Kugellager 28 von der Wanne 20 aufgenommen werden können. Um die Hohlwelle 27 herum ist eine Zahnscheibe 26 der Hohlwelle 27 feststehend angeordnet. Die beiden Zahlscheiben 23, 26 sind über einen Zahnriemen 24 als Kopplungselement 24 verbunden, so dass eine Rotationsbewegung des elektrischen Motors 22 über den Zahnriemen 24 rotatorisch auf die Kugelgewindemutter 25 übertragen werden kann.

Innerhalb der Kugelgewindemutter 25 ist die Spindel 29 angeordnet, so dass die Spindel 29 durch die Rotation der Kugelgewindemutter 25 in der Höhe Z angehoben und abgesenkt werden kann. Dabei ist die Spindel 29 in dem dritten Ausführungsbeispiel der Figur 4 starr über die zweite Stellgliedhalterung 21 in Form eines Bügels 21 mit der Sitzfläche 11 verbunden. In dem vierten Ausführungsbeispiel der Figur 5 ist zwischen dem Bügel 21 und der Sitzfläche 11 ein elastisches Dämpfungselement 15 in Form eines elastomeren Dämpfungselements 15 angeordnet, um auch an dieser Stelle eine passive Dämpfung vorzusehen.

In dem dritten und vierten Ausführungsbeispiel der Figur 4 bzw. 5 ist jeweils eine horizontale Verschiebungseinrichtung 14 in Form eines horizontalen Schienensystems 14 zwischen der Scherenkinematik 12 und dem Gestell 10 vorgesehen, so dass die Sitzfläche 11 samt Scherenkinematik 12 und Stellglied 2 in der Tiefe X relativ zum Gestell 10 bewegt werden kann. Hierdurch kann ein Fahrer den Fahrersitz 1 relativ zum Lenkrad verstellen.

### Bezugszeichenliste (Teil der Beschreibung)

- X: Längsrichtung; Tiefe; zweite Raumrichtung
- Y: Querrichtung; Breite
- Z: vertikale Richtung; Höhe; erste Raumrichtung
- Z1: vertikale Bewegungsrichtung des beweglichen Federungsteils 11
- Z2: vertikale Bewegungsrichtung des feststehenden Federungsteils 10

- 1: Federungssystem; Fahrersitz
- 10: erstes Federungsteil; feststehendes Federungsteil; Gestell des Fahrersitzes 1
- 11: zweites Federungsteil; bewegliches Federungsteil; Sitzfläche des Fahrersitzes 1
- 12: (Scheren-)Kinematik
- 13: Federeinrichtung; elastische Federung; Luftfeder; Spiralfeder
- 14: (horizontale) Verschiebungseinrichtung; (horizontales) Schienensystem
- 15: elastisches Dämpfungselement; elastomeres Dämpfungselement
- 2: Stellglied
- 20: erste Stellgliedhalterung; Wanne
- 21: zweite Stellgliedhalterung; Bügel
- 22: (elektrischer) Motor
- 23: Zahnscheibe des Motors 22
- 24: Kopplungselement; Zahnriemen
- 25: Gewindemutter; Kugelgewindemutter
- 26: Zahnscheibe der Hohlwelle 27
- 27: Hohlwelle
- 28: Lagerung; Kugellager
- 29: Spindel
- 3: Steuerungseinheit
- 4: Positionssensor
- 5: Beschleunigungssensor
- 6: Untergrund; Karosserie; Chassis

## Patentansprüche

1. Federungssystem (1), vorzugsweise Fahrersitz (1), mit
einem ersten Federungsteil (10), vorzugsweise einem Gestell (10) des Fahrsitzes (1), einem zweiten Federungsteil (11), vorzugsweise einer Sitzfläche (11) des Fahrersitzes (1),
wobei die beiden Federungsteile (10, 11) relativ zueinander in wenigstens einer ersten Raumrichtung (Z), vorzugsweise in der Höhe (Z), beweglich sind,
einer Kinematik (12), vorzugsweise einer Scherenkinematik (12), welche ausgebildet ist, die beiden Federungsteile (10, 11) relativ zueinander wenigstens in der ersten Raumrichtung (Z) beweglich zu verbinden,
einer Federeinrichtung (13), welche ausgebildet ist, die statische Last des zweiten Federungsteils (11) zu tragen, und
einem Stellglied (2), welches ausgebildet ist, eine Kraft bidirektional zwischen den beiden Federungsteilen (10, 11) einzuleiten und hierdurch die Relativbewegung der beiden Federungsteile (10, 11) zueinander aktiv zu dämpfen,
**dadurch gekennzeichnet, dass**
das Stellglied (2) eine Lagerung (28), vorzugsweise ein Kugellager (28), aufweist, welche innerhalb des Kraftflusses zwischen den beiden Federungsteilen (10, 11) derart angeordnet ist, so dass eine Axiallast von der antreibenden Achse des Stellglieds (2) zumindest teilweise, vorzugsweise vollständig, ferngehalten werden kann.

2. Federungssystem (1) nach Anspruch 1, **dadurch gekennzeichnet, dass**
das Stellglied (2) einen Motor (22), vorzugsweise einen elektrischen Motor (22), eine Gewindemutter (25), vorzugsweise eine Kugelgewindemutter (25) und eine Spindel (29) aufweist,
wobei der Motor (22) ausgebildet ist, die Spindel (29) anzutreiben, so dass die Gewindemutter (25) relativ zur Spindel (29), vorzugsweise in der ersten Raumrichtung (Z), bewegt werden kann,
wobei die Lagerung (28) zwischen dem Motor (22) und der Spindel (29) angeordnet ist,
wobei der Motor (22) am ersten Federungsteil (10) und die Gewindemutter (25) am zweiten Federungsteil (11) angeordnet ist, oder umgekehrt.

3. Federungssystem (1) nach Anspruch 2, **dadurch gekennzeichnet, dass**
der Motor (22) und die Spindel (29) derart angeordnet sind, dass der Motor (22) die Spindel (29) direkt antreiben kann,
wobei der Motor (22) und die Spindel (29) eine gemeinsame Rotationsachse aufweisen, welche vorzugsweise in der ersten Raumrichtung (Z) orientiert ist.

4. Federungssystem (1) nach Anspruch 2 oder 3, **dadurch gekennzeichnet, dass** das Stellglied (2) außerhalb der beiden Federungsteile (10, 11), vorzugsweise ferner parallel zu den beiden Federungsteilen (10, 11), angeordnet ist.

5. Federungssystem (1) nach Anspruch 1, **dadurch gekennzeichnet, dass**
das Stellglied (2) einen Motor (22), vorzugsweise einen elektrischen Motor (22), eine Gewindemutter (25), vorzugsweise eine Kugelgewindemutter (25) und eine Spindel (29) aufweist,
wobei der Motor (22) ausgebildet ist, die Gewindemutter (25) anzutreiben, so dass die Spindel (29) relativ zur Gewindemutter (25), vorzugsweise in der ersten Raumrichtung (Z), bewegt werden kann,
wobei die Lagerung (28) innerhalb des Kraftflusses zwischen dem Motor (22) und der Gewindemutter (25) angeordnet ist,
wobei der Motor (22) am ersten Federungsteil (10) und die Spindel (29) am zweiten Federungsteil (11) angeordnet ist, oder umgekehrt.

6. Federungssystem (1) nach Anspruch 5, **dadurch gekennzeichnet, dass**
der Motor (22) und die Gewindemutter (25) derart angeordnet sind, dass der Motor (22) die Gewindemutter (25) indirekt über ein Kopplungselement (24), vorzugsweise über einen Zahnriemen (24), antreiben kann,
wobei der Motor (22) und die Gewindemutter (25) zwei unterschiedliche Rotationsachsen aufweisen, welche vorzugsweise parallel zueinander und besonders vorzugsweise ferner in der ersten Raumrichtung (Z) orientiert sind.

7. Federungssystem (1) nach einem der Ansprüche 5 oder 6, **dadurch gekennzeichnet, dass** das Stellglied (2) zwischen den beiden Federungsteilen (10, 11) angeordnet ist, wobei das Stellglied (2) vorzugsweise ferner ausgebildet ist, die Kraft bidirektional zwischen den beiden Federungsteilen (10, 11) in der ersten Raumrichtung (Z) einzuleiten.

8. Federungssystem (1) nach einem der Ansprüche 5 bis 7, **gekennzeichnet durch** ein elastisches Dämpfungselement (15), vorzugsweise ein elastomeres Dämpfungselement (15), welches zwischen der Spindel (29) und dem Federungsteil (10; 11) angeordnet und ausgebildet ist, den Kraftfluss passiv zu dämpfen.

9. Federungssystem (1) nach einem der vorherigen Ansprüche, **gekennzeichnet durch** eine Steuerungseinheit (3), welche ausgebildet ist, den Stellantrieb (2) derart zu steuern, so dass die Relativbewegung der beiden Federungsteile (10, 11) zueinander aktiv gedämpft werden kann.

10. Federungssystem (1) nach Anspruch 9, **gekennzeichnet durch** wenigstens einen Positionssensor (4), welcher ausgebildet ist, eine Position des ersten Federungsteils (10) relativ zum zweiten Federungsteil (11) in wenigstens der ersten Raumrichtung (Z) zu erfassen, oder umgekehrt,
wobei der Positionssensor (4) ferner ausgebildet ist, die erfasste Position der Steuerungseinheit (3) zur Verfügung zu stellen.

11. Federungssystem (1) nach Anspruch 10, **dadurch gekennzeichnet, dass** der Positionssensor (4) absolut oder inkrementell messend ausgebildet ist.

12. Federungssystem (1) nach einem der Ansprüche 9 bis 11, **gekennzeichnet durch** wenigstens einen Beschleunigungssensor (5), welcher ausgebildet ist, eine Beschleunigung des ersten Federungsteils (10) relativ zum zweiten Federungsteil (11) in wenigstens einer Raumrichtung (X; Y; X), vorzugsweise in der ersten Raumrichtung (Z), zu erfassen, oder umgekehrt,
wobei der Beschleunigungssensor (5) ferner ausgebildet ist, die erfasste Beschleunigung der Steuerungseinheit (3) zur Verfügung zu stellen.

13. Federungssystem (1) nach einem der Ansprüche 9 bis 12, **gekennzeichnet durch** eine Mehrzahl von Beschleunigungssensoren (5), welche ausgebildet sind, mehrere Beschleunigungen des ersten Federungsteils (10) relativ zum zweiten Federungsteil (11) in mehreren Raumrichtungen (X, Y, Z), vorzugsweise in drei senkrecht zueinander orientierten Raumrichtungen (X, Y, Z), besonders vorzugsweise in der Tiefe (X), in der Breite (Y) und in der Höhe (Z), zu erfassen, oder umgekehrt, wobei die Beschleunigungssensoren (5) ferner ausgebildet sind, die erfassten Beschleunigungen der Steuerungseinheit (3) zur Verfügung zu stellen.

14. Federungssystem (1) nach einem der vorherigen Ansprüche, **gekennzeichnet durch** wenigstens eine Verschiebungseinrichtung (14), vorzugsweise wenigstens eine horizontale Verschiebungseinrichtung (14), besonders vorzugsweise wenigstens ein horizontales Schienensystem (14), welche ausgebildet ist, so dass
das zweite Federungsteil (11) relativ zur Kinematik (12) in einer zweiten Raumrichtung (X), vorzugsweise in der Tiefe (X), verschoben werden kann, und/oder
die Kinematik (12) relativ zum ersten Federungsteil (10) in einer zweiten Raumrichtung (X), vorzugsweise in der Tiefe (X), verschoben werden kann, und/oder
das erste Federungsteil (10) relativ zu einem Untergrund (6) in einer zweiten Raumrichtung (X), vorzugsweise in der Tiefe (X), verschoben werden kann.

15. Fahrzeug, mit
einem Federungssystem (1) nach einem der vorherigen Ansprüche.

## Claims

1. Suspension system (1), preferably driver's seat (1), comprising
a first suspension part (10), preferably a frame (10) of the driver's seat (1),
a second suspension part (11), preferably a seat surface (11) of the driver's seat (1),
wherein the two suspension parts (10, 11) are movable relative to one another in at least one first spatial direction (Z), preferably in the height direction (Z),
a kinematics system (12), preferably a scissor-type kinematics system (12), which is designed to connect the two suspension parts (10, 11) such that they are movable relative to one another at least in the first spatial direction (Z),
a spring device (13) which is designed to support the static load of the second suspension part (11), and
an actuating element (2) which is designed to introduce a force bidirectionally between the two suspension parts (10, 11) and in this way to actively damp the relative movement of the two suspension parts (10, 11) in relation to one another,
**characterized in that**
the actuating element (2) has a bearing arrangement (28), preferably a ball bearing (28), which is arranged within the force flow between the two suspension parts (10, 11) in such a way that an axial load can be at least partially, preferably entirely, kept away from the driving axis of the actuating element (2).

2. Suspension system (1) according to Claim 1, **characterized in that**
the actuating element (2) has a motor (22), preferably an electric motor (22), a threaded nut (25), preferably a ball screw nut (25), and a spindle (29),
wherein the motor (22) is designed to drive the spindle (29), so that the threaded nut (25) can be moved relative to the spindle (29), preferably in the first spatial direction (Z),
wherein the bearing arrangement (28) is arranged between the motor (22) and the spindle (29),
wherein the motor (22) is arranged on the first suspension part (10) and the threaded nut (25) is arranged on the second suspension part (11), or vice versa.

3. Suspension system (1) according to Claim 2, **characterized in that**
the motor (22) and the spindle (29) are arranged in such a way that the motor (22) can directly drive the spindle (29),
wherein the motor (22) and the spindle (29) have a common rotation axis which is preferably oriented in the first spatial direction (Z).

4. Suspension system (1) according to Claim 2 or 3, **characterized in that**
the actuating element (2) is arranged outside the two suspension parts (10, 11), preferably further parallel in relation to the two suspension parts (10, 11).

5. Suspension system (1) according to Claim 1, **characterized in that**
the actuating element (2) has a motor (22), preferably an electric motor (22), a threaded nut (25), preferably a ball screw nut (25), and a spindle (29),
wherein the motor (22) is designed to drive the threaded nut (25), so that the spindle (29) can be moved relative to the threaded nut (25), preferably in the first spatial direction (Z),
wherein the bearing arrangement (28) is arranged within the force flow between the motor (22) and the threaded nut (25),
wherein the motor (22) is arranged on the first suspension part (10) and the spindle (29) is arranged on the second suspension part (11), or vice versa.

6. Suspension system (1) according to Claim 5, **characterized in that**
the motor (22) and the threaded nut (25) are arranged in such a way that the motor (22) can indirectly drive the threaded nut (25) via a coupling element (24), preferably via a toothed belt (24),
wherein the motor (22) and the threaded nut (25) have two different rotation axes which are preferably oriented parallel in relation to one another and particularly preferably further in the first spatial direction (Z).

7. Suspension system (1) according to either of Claims 5 and 6, **characterized in that** the actuating element (2) is arranged between the two suspension parts (10, 11), wherein the actuating element (2) is preferably further designed to introduce the force bidirectionally between the two suspension parts (10, 11) in the first spatial direction (Z).

8. Suspension system (1) according to one of Claims 5 to 7, **characterized by**
an elastic damping element (15), preferably an elastomeric damping element (15) which is arranged between the spindle (29) and the suspension part (10; 11) and is designed to passively damp the force flow.

9. Suspension system (1) according to one of the preceding claims, **characterized by**
a control unit (13) which is designed to control the actuating drive (2) in such a way that the relative movement of the two suspension parts (10, 11) in relation to one another can be actively damped.

10. Suspension system (1) according to Claim 9, **characterized by**
at least one position sensor (4) which is designed to detect a position of the first suspension part (10) relative to the second suspension part (11) in at least the first spatial direction (Z), or vice versa,
wherein the position sensor (4) is further designed to make the detected position available to the control unit (3) .

11. Suspension system (1) according to Claim 10, **characterized in that**
the position sensor (4) is designed to measure in absolute terms or in increments.

12. Suspension system (1) according to one of Claims 9 to 11, **characterized by**
at least one acceleration sensor (5) which is designed to detect an acceleration of the first suspension part (10) relative to the second suspension part (11) in at least one spatial direction (X; Y; Z), preferably in the first spatial direction (Z), or vice versa,
wherein the acceleration sensor (5) is further designed to make the detected acceleration available to the control unit (3).

13. Suspension system (1) according to one of Claims 9 to 12, **characterized by**
a plurality of acceleration sensors (5) which are designed to detect a plurality of accelerations of the first suspension part (10) relative to the second suspension part (11) in a plurality of spatial directions (X, Y, Z), preferably in three spatial directions (X, Y, Z) which are oriented perpendicularly in relation to one another, particularly preferably in the depth direction (X), in the width direction (Y) and in the height direction (Z), or vice versa,
wherein the acceleration sensors (5) are further designed to make the detected accelerations available to the control unit (3).

14. Suspension system (1) according to one of the preceding claims, **characterized by**
at least one shifting device (14), preferably at least one horizontal shifting device (14), particularly preferably at least one horizontal rail system (14), which is designed so that
the second suspension part (11) can be shifted relative to the kinematics system (12) in a second spatial direction (X), preferably in the depth direction (X),
and/or
the kinematics system (12) can be shifted relative to the first suspension part (10) in a second spatial direction (X), preferably in the depth direction (X), and/or
the first suspension part (10) can be shifted relative to a substrate (6) in a second spatial direction (X), preferably in the depth direction (X).

15. Vehicle comprising
a suspension system (1) according to one of the preceding claims.

## Revendications

1. Système de suspension (1), de préférence siège de conducteur (1), comprenant
une première partie de suspension (10), de préférence un bâti (10) du siège de conducteur (1),
une deuxième partie de suspension (11), de préférence une surface d'assise (11) du siège de conducteur (1), les deux parties de suspension (10, 11) étant mobiles l'une par rapport à l'autre dans au moins une première direction spatiale (Z), de préférence en hauteur (Z), une cinématique (12), de préférence une cinématique à pantographe (12), qui est réalisée pour relier les deux parties de suspension (10, 11) de manière mobile l'une par rapport à l'autre au moins dans la première direction spatiale (Z),
un dispositif faisant ressort (13) qui est réalisé pour supporter la charge statique de la deuxième partie de suspension (11), et
un actionneur (2) qui est réalisé pour introduire une force de manière bidirectionnelle entre les deux parties de suspension (10, 11) et pour amortir ainsi activement le mouvement relatif des deux parties de suspension (10, 11) l'une par rapport à l'autre, **caractérisé en ce que** l'actionneur (2) présente une disposition de paliers (28), de préférence un roulement à billes (28), qui est disposée à l'intérieur du flux de force entre les deux parties de suspension (10, 11) de telle sorte qu'une charge axiale peut être écartée au moins partiellement, de préférence complètement, de l'axe d'entraînement de l'actionneur (2).

2. Système de suspension (1) selon la revendication 1, **caractérisé en ce que** l'actionneur (2) présente un moteur (22), de préférence un moteur électrique (22), un écrou fileté (25), de préférence un écrou à billes (25), et une broche (29),
le moteur (22) étant réalisé pour entraîner la broche (29) de sorte que l'écrou fileté (25) peut être déplacé par rapport à la broche (29), de préférence dans la première direction spatiale (Z),
la disposition de paliers (28) étant disposée entre le moteur (22) et la broche (29),
le moteur (22) étant disposé au niveau de la première partie de suspension (10) et l'écrou fileté (25) étant disposé au niveau de la deuxième partie de suspension (11) ou vice versa.

3. Système de suspension (1) selon la revendication 2, **caractérisé en ce que** le moteur (22) et la broche (29) sont disposés de telle sorte que le moteur (22) peut entraîner la broche (29) directement,
le moteur (22) et la broche (29) présentant un axe de rotation commun qui est orienté de préférence dans la première direction spatiale (Z).

4. Système de suspension (1) selon la revendication 2 ou 3, **caractérisé en ce que** l'actionneur (2) est disposé à l'extérieur des deux parties de suspension (10, 11), de préférence en outre en parallèle aux deux parties de suspension (10, 11).

5. Système de suspension (1) selon la revendication 1, **caractérisé en ce que** l'actionneur (2) présente un moteur (22), de préférence un moteur électrique (22), un écrou fileté (25), de préférence un écrou à billes (25), et une broche (29),
le moteur (22) étant réalisé pour entraîner l'écrou fileté (25) de telle sorte que la broche (29) peut être déplacée par rapport à l'écrou fileté (25), de préférence dans la première direction spatiale (Z),
la disposition de paliers (28) étant disposée à l'intérieur du flux de force entre le moteur (22) et l'écrou fileté (25),
le moteur (22) étant disposé au niveau de la première partie de suspension (10), et la broche (29) étant disposée au niveau de la deuxième partie de suspension (11), ou vice versa.

6. Système de suspension (1) selon la revendication 5, **caractérisé en ce que** le moteur (22) et l'écrou fileté (25) sont disposés de telle sorte que le moteur (22) peut entraîner l'écrou fileté (25) indirectement par un élément d'accouplement (24), de préférence par une courroie crantée (24),
le moteur (22) et l'écrou fileté (25) présentant deux axes de rotation différents qui sont orientés de préférence en parallèle l'un à l'autre et de manière particulièrement préférée en outre dans la première direction spatiale (Z).

7. Système de suspension (1) selon l'une quelconque des revendications 5 ou 6, **caractérisé en ce que** l'actionneur (2) est disposé entre les deux parties de suspension (10, 11), l'actionneur (2) étant de préférence en outre réalisé pour introduire la force de manière bidirectionnelle entre les deux parties de suspension (10, 11) dans la première direction spatiale (Z) .

8. Système de suspension (1) selon l'une quelconque des revendications 5 à 7, **caractérisé par** un élément d'amortissement élastique (15), de préférence un élément d'amortissement élastomère (15), qui est disposé entre la broche (29) et la partie de suspension (10 ; 11) et est réalisé pour amortir passivement le flux de force.

9. Système de suspension (1) selon l'une quelconque des revendications précédentes, **caractérisé par** une unité de commande (3) qui est réalisée pour commander l'actionneur (2) de telle sorte que le mouvement relatif des deux parties de suspension (10, 11) l'une par rapport à l'autre peut être amorti activement.

10. Système de suspension (1) selon la revendication 9, **caractérisé par** au moins un capteur de position (4) qui est réalisé pour détecter une position de la première partie de suspension (10) par rapport à la deuxième partie de suspension (11) dans au moins la première direction spatiale (Z), ou vice versa,
le capteur de position (4) étant en outre réalisé pour fournir la position détectée à l'unité de commande (3).

11. Système de suspension (1) selon la revendication 10, **caractérisé en ce que** le capteur de position (4) est réalisé à mesure absolue ou incrémentale.

12. Système de suspension (1) selon l'une quelconque des revendications 9 à 11, **caractérisé par** au moins un capteur d'accélération (5) qui est réalisé pour détecter une accélération de la première partie de suspension (10) par rapport à la deuxième partie de suspension (11) dans au moins une direction spatiale (X ; Y ; X), de préférence dans la première direction spatiale (Z), ou vice versa,
le capteur d'accélération (5) étant en outre réalisé pour fournir l'accélération détectée à l'unité de commande (3).

13. Système de suspension (1) selon l'une quelconque des revendications 9 à 12, **caractérisé par** une pluralité de capteurs d'accélération (5) qui sont réalisés pour détecter plusieurs accélérations de la première partie de suspension (10) par rapport à la deuxième partie de suspension (11) dans plusieurs directions spatiales (X, Y, Z), de préférence dans trois directions spatiales (X, Y, Z) orientées perpendiculairement les unes aux autres, de manière particulièrement préférée en profondeur (X), en largeur (Y) et en hauteur (Z), ou vice versa, les capteurs d'accélération (5) étant en outre réalisés pour fournir les accélérations détectées à l'unité de commande (3).

14. Système de suspension (1) selon l'une quelconque des revendications précédentes, **caractérisé par** au moins un dispositif de décalage (14), de préférence au moins un dispositif de décalage horizontal (14), de manière particulièrement préférée au moins un système de rails horizontal (14), qui est réalisé de telle sorte que
la deuxième partie de suspension (11) peut être décalée par rapport à la cinématique (12) dans une deuxième direction spatiale (X), de préférence en profondeur (X), et/ou
la cinématique (12) peut être décalée par rapport à la première partie de suspension (10) dans une deuxième direction spatiale (X), de préférence en profondeur (X), et/ou
la première partie de suspension (10) peut être décalée par rapport à un fond (6) dans une deuxième direction spatiale (X), de préférence en profondeur (X).

15. Véhicule, comprenant un système de suspension (1) selon l'une quelconque des revendications précédentes.
